(19)

**Europäisches Patentamt**
**European Patent Office**
**Office européen des brevets**

(11) **EP 4 496 199 A1**

(12) **EUROPEAN PATENT APPLICATION**

(43) Date of publication:
**22.01.2025 Bulletin 2025/04**

(21) Application number: **23186463.8**

(22) Date of filing: **19.07.2023**

(51) International Patent Classification (IPC):
$H02M\ 1/00^{(2006.01)}$     $H02M\ 1/42^{(2007.01)}$
$H02M\ 3/00^{(2006.01)}$     $H02M\ 3/335^{(2006.01)}$
$H02M\ 7/48^{(2007.01)}$     $H02M\ 7/483^{(2007.01)}$
$H02M\ 1/15^{(2006.01)}$     $H02M\ 7/487^{(2007.01)}$

(52) Cooperative Patent Classification (CPC):
H02M 1/0095; H02M 1/007; H02M 1/0074;
H02M 1/15; H02M 1/4216; H02M 3/01;
H02M 3/33571; H02M 3/33573; H02M 3/33592;
H02M 7/4807; H02M 7/4835; H02M 7/487

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB E-mobility B.V.**
**2629 JG Delft (NL)**

(72) Inventors:
• **HUBER, Jonas**
  **8044 Zurich (CH)**
• **KOLAR, Johann Walter**
  **8053 Zurich (CH)**
• **DROFENIK, Uwe**
  **5000 Aarau (CH)**
• **CANALES, Francisco**
  **5405 Baden-Dättwil (CH)**

(74) Representative: **Zimmermann & Partner**
**Patentanwälte mbB**
**Postfach 330 920**
**80069 München (DE)**

(54) **CONVERTER FOR TRANSFERRING POWER AND CORRESPONDING METHOD**

(57)     A converter (100, 200) for transferring power from a medium voltage side (MV) to a low voltage side (LV) or vice-versa is provided. The converter (100, 200) comprises an AC/DC converter stage (CS) configured to be connected to a three-phase medium-voltage AC power source (va, vb, vc) at the medium voltage side, the AC/DC converter stage (CS) having three AC input terminals (A, B, C) for the respective AC phases of the medium-voltage AC power source (va, vb, vc), and having a positive voltage output (P) and a negative voltage output (N); a DC link (DCL) comprising at least one first DC/DC converter and at least one second DC/DC converter, wherein input sides of the at least one first and second DC/DC converters (OC1, OC2, OC3, OC4) are connected in series between the positive output (P) and the negative output (N) of the AC/DC converter stage (CS), with a midpoint (M) between the at least one first DC/DC converter (OC1, OC2) and the at least one second DC/DC converter (OC3, OC4); wherein output sides of the at least one first and second DC/DC converters (OC 1, OC2, OC3, OC4) are connected in parallel to provide a low voltage ($V_{out}$) to low-voltage output terminals on the low voltage side; three switchable branches (BR1, BR2, BR3), each of the switchable branches (BR1, BR2, BR3) comprising a bi-directional switch circuit between a respective one of the three AC input terminals (A, B, C) and a common star point (S); a regulating circuit comprising either at least one voltage-source-type full-bridge circuit (CL1, CL2) including a DC/DC stage, in particular a DC/DC converter including an isolation transformer, the at least one voltage-source-type full-bridge circuit (CL1, CL2) connected, on its input side, between the star point (S) and the midpoint (M) and, on its output side, to the low-voltage output terminals; or at least one first full-bridge circuit between cathode connections of a diode bridge in the AC/DC converter stage and the positive output (P), and at least one second full-bridge circuit connected between anode connections of the diode bridge and the negative output (N); and a controller configured to control the first and second DC/DC converters, the bi-directional switch circuits, and the regulating circuit such that a current ($i_{pm}$) between the positive voltage output (P) and the midpoint (M) essentially equals a maximum phase current ($i_{max}$) of the phase in which the phase voltage at the point in time of performing the control is the highest among the three AC phases, and such that a current ($i_{mn}$) between the midpoint (M) and the negative voltage output (N) essentially equals a minimum phase current ($i_{min}$) of the phase in which the phase voltage at the point in time of performing the control is the lowest among the three AC phases.

EP 4 496 199 A1

Fig. 1

**Description**

TECHNICAL FIELD

The present disclosure generally relates to a converter and a method for operating the converter, and in particular to a converter and a corresponding method for transferring power from a medium voltage side to a low voltage side or vice-versa.

BACKGROUND

Converters for transferring power between a medium (MV) and a low voltage (LV) side are generally known in the art. A common use case are power supply units (PSU). In the exemplary case of transferring power from the medium to the low voltage side, such a PSU serves, for example, in charging of electric vehicles, supply of datacenter loads etc. A general requirement for such PSUs is to provide a constant output voltage, a constant output power, and to draw approximately sinusoidal currents from the MV grid, which are furthermore in phase with the grid phase voltages, i.e., to achieve power-factor correction (PFC) functionality.

Whereas traditional PSUs employ a low-frequency transformer (LFT) to step-down the MV grid voltage such that LV PFC rectifiers can be employed, solid-state transformer (SST) concepts directly interface the MV grid with power electronic converter stages and provide the galvanic isolation with medium-frequency transformers (MFTs) as part of isolated dc-dc converters, possibly leading to more compact realizations. To handle the relatively high MV levels, typically series connections of converter cells are employed, e.g., a cascaded-H-bridge (CHB) structure, where each MV phase connects to a branch consisting of a series filter inductor and a multitude of cascaded converter cells. Each cell contains an ac-dc stage and an isolated dc-dc converter. Whereas such a system provides full functionality in the sense of supporting arbitrary power factors at the grid interface (in particular, bidirectional power flow), the complexity is relatively high, and each branch essentially processes single-phase power with a corresponding large fluctuation.

There is a need for a converter having a comparatively low complexity and providing a comparatively low power fluctuation.

SUMMARY

According to the present disclosure, a converter according to claim 1, a method according to claim 9, and a use according to claim 11 are provided.

According to an aspect, a converter for transferring power from a MV side to a LV side or vice-versa is described. The converter comprises an AC/DC converter stage, a DC link, three switchable branches, a regulating circuit, and a controller. The AC/DC converter stage is configured to be connected to a three-phase medium-voltage AC power source at the medium voltage side. The AC/DC converter stage includes three AC input terminals for the respective AC phases of the medium-voltage AC power source. The AC/DC converter stage further includes a positive voltage output and a negative voltage output. The DC link comprises at least one first DC/DC converter and at least one second DC/DC converter. Input sides of the at least one first and second DC/DC converters are connected in series between the positive output and the negative output of the AC/DC converter stage, with a midpoint between the at least one first DC/DC converter and the at least one second DC/DC converter. Output sides of the at least one first and second DC/DC converters are connected in parallel to provide a low voltage to low-voltage output terminals on the low voltage side. Each of the switchable branches comprises a bi-directional switch circuit between a respective one of the three AC input terminals and a common star point. The regulating circuit comprises either at least one voltage-source-type full-bridge circuit including a DC/DC stage, in particular a DC/DC converter including an isolation transformer, the at least one voltage-source-type full-bridge circuit connected, on its input side, between the star point and the midpoint and, on its output side, to the low-voltage output terminals, or the regulating circuit comprises at least one first full-bridge circuit between cathode connections of a diode bridge in the AC/DC converter stage and the positive output, and at least one second full-bridge circuit is connected between anode connections of the diode bridge and the negative output. The controller is configured to control the first and second DC/DC converters, the bi-directional switch circuits, and the at least one regulating circuit such that a current between the positive voltage output and the midpoint essentially equals a maximum phase current of the phase in which the phase voltage at the point in time of performing the control is the highest among the three AC phases, and such that a current between the midpoint and the negative voltage output essentially equals a minimum phase current of the phase in which the phase voltage at the point in time of performing the control is the lowest among the three AC phases.

A low voltage, as used herein, may refer to a voltage above 200 Volt (V), such as a voltage between 200 V - 1 kV, or even 200 V - 1.5 kV. A medium voltage, as used herein, may refer to voltage higher than the low voltage, such as a voltage of above 1 kV, or even of above 1.5 kV, such as a voltage between 1 kV - 52 kV or 1.5 kV - 52 kV, particularly between 1 kV - 30 kV or 1.5 kV - 30 kV. For example, a medium voltage may be a voltage received, and optionally rectified, from a medium voltage grid, such as a 10 kV grid, a 15 kV grid, a 20 kV grid, a 25 kV grid, a 30 kV grid, or even a 50 kV grid. The medium voltage grid may be e.g. a 50 Hz grid or a 60 Hz grid.

The low voltage DC power may be particularly useful for low voltage DC applications, such as, but not limited to, powering devices, electric vehicle charging, electrolytic processes such as hydrogen generation, and/or any of the uses described in the background section of this disclosure. The converter may be configured for providing a low voltage DC power having at least 500 Kilowatt (kW), at least 1 MW, at least 2 MW, at least 3 MW, at least 5 MW, or even at least 10 MW.

As the medium voltage is present at the positive voltage output and the negative voltage output of the AC/DC converter stage, the positive voltage output of the AC/DC converter stage may be referred to herein as a positive medium voltage output, and the negative voltage output of the AC/DC converter stage may be referred to as the negative medium voltage output. The positive and negative voltage outputs may include a respective positive terminal and negative terminal, the positive and negative terminals being respectively connected to the input side of the first or second DC/DC converters.

In some embodiments, the controller is configured to control the first and second DC/DC converters, the bi-directional switch circuits, and the at least one regulating circuit such that the current in the switchable branch connected to the phase that is different from the phase in which the phase voltage at the point in time of performing the control is the highest among the three AC phases and different from the phase in which the phase voltage at the point in time of performing the control is the lowest among the three AC phases, i.e. the phase with the mid voltage, essentially equals the phase current of that phase.

In some embodiments, the at least one first full-bridge circuit comprises two or more full bridge circuits connected in series. Alternatively or additionally, the at least one second full-bridge circuit comprises two or more full bridge circuits connected in series. For example, the first and/or second full-bridge circuits comprise two full-bridge circuits connected in series. Advantageously, all of the first and second full-bridge circuits comprise a same number of full-bridge circuits.

In some embodiments, the at least one voltage-source-type full-bridge circuit comprises two or more voltage-source-type full-bridge circuits connected in series. For example, the voltage-source-type full-bridge circuit comprises two voltage-source-type full-bridge circuits connected in series.

In some embodiments, the at least one first DC/DC converter comprises a plurality of first DC/DC converter circuits connected with their input sides in series between the positive medium voltage output and the DC link midpoint, and the at least one second DC/DC converter comprises a plurality of second DC/DC converter circuits connected with their cell input sides in series between the negative medium voltage output (N) and the DC link midpoint.

On the output side of the DC/DC converters, the low voltage DC power is output. For example, the output side of the DC/DC converters includes a positive low voltage output terminal and a negative low voltage output terminal.

In some embodiments, each of the first and second DC/DC converter circuits comprises, respectively, the input side having a DC/AC converter circuit and an output side having an AC/DC converter circuit, wherein the input side and output side are galvanically isolated from each other, optionally galvanically isolated by an AC/AC transformer for transferring power from the cell input side to the cell output side or vice-versa. The AC/AC transformer may be a Medium Frequency Transformer, MFT.

As used herein, a MFT may refer to a transformer configured for transforming a medium frequency AC power. The medium frequency AC power may have a medium frequency. A medium frequency, according to embodiments described herein, may be understood as a frequency at or above 400 Hertz (Hz), at or above 600 Hz, at or above 800 Hz, at or above 1 kHz, at or above 2 kHz, at or above 5 kHz, at or above 10 kHz, at or above 20 kHz, at or above 50 kHz, or even at or above 100 kHz. The medium frequency transformer 120 may be a medium frequency transformer as described in document WO2021115966A1, which is incorporated herein in its entirety, and/or particularly to the extent of the description of a medium frequency transformer in the document. The medium frequency transformer may be configured for transforming the medium-frequency medium voltage AC power into a medium-frequency low voltage AC power.

In some embodiments, the first and second DC/DC converter circuits have, at their output side, a diode-based passive AC/DC converter circuit. Passive, as used herein, may refer to a circuit in which no switches such as transistors are controlled. For example, the first and second DC/DC converters are input-side controlled, having an actively switched DC/AC converter circuit on their input side. In general, also employable is any DC/DC converter stage in which the input current is controlled. For example, also employable is a stage in which the input voltage is regulated and a series inductance is included in the string of the DC/DC converter stage.

In some embodiments, output sides of the at least one first and the at least one second DC/DC converter circuits are connected in parallel to form the low voltage side. For example, when the output sides are connected in parallel and the input sides are connected in series, an input-series output-parallel (ISOP) configuration may be established.

In some embodiments, the AC/DC converter stage comprises a diode bridge. For example, the diode bridge includes a B6 diode bridge. When a diode bridge is used, the power typically flows from the MV side to the LV side, i.e. power is transferred from the MV to the LV side.

Alternatively, in some embodiments, the AC/DC converter stage may comprise a bi-directional power flow configuration. For example, IGBTs may be used instead of the diode bridge, such as IGBTs in an IGBT unfolder configuration, or GTOs may be used instead of the diode bridge. In a bi-directional power flow configuration, power may be transferred from the MV to the LV side, from the LV side to the MV side, or selectively between the MV and the LV side. It is noted that, although the description herein occasionally refers to an input side or an output side, e.g. the input and output sides of the DC/DC converters, this is not to be understood in a limiting manner and only exemplarily relates to the case when power is transferred from the MV to the LV side; that is, when power is transferred from the LV to the MV side, the input and output sides may still be referred to as such, even though their respective roles of inputting/outputting power are swapped.

In some embodiments, the at least one first DC/DC converter circuit and the at least one second DC/DC converter circuit operate at a medium frequency. A medium frequency, as used herein, may refer to frequency at or above 400 Hertz (Hz), at or above 600 Hz, at or above 800 Hz, at or above 1 kHz, at or above 2 kHz, at or above 5 kHz, at or above 10 kHz, at or above 20 kHz, at or above 50 kHz, or even at or above 100 kHz.

According to an aspect, a method of transferring power from a MV side to a LV side, or vice-versa, using a converter, is described. The converter is essentially configured as described herein. For example, the converter includes an AC/DC converter stage, a DC link, three switchable branches, and a regulating circuit. The AC/DC converter stage is configured to be connected to a three-phase medium-voltage AC power source at the medium voltage side. The AC/DC converter stage includes three AC input terminals for the respective AC phases of the medium-voltage AC power source. The AC/DC converter stage further includes a positive voltage output and a negative voltage output. The DC link comprises at least one first DC/DC converter and at least one second DC/DC converter. Input sides of the at least one first and second DC/DC converters are connected in series between the positive output and the negative output of the AC/DC converter stage, with a midpoint between the at least one first DC/DC converter and the at least one second DC/DC converter. Output sides of the at least one first and second DC/DC converters are connected in parallel to provide a low voltage to low-voltage output terminals on the low voltage side. Each of the switchable branches comprises a bi-directional switch circuit between a respective one of the three AC input terminals and a common star point. The regulating circuit comprises either at least one voltage-source-type full-bridge circuit including a DC/DC stage, in particular a DC/DC converter including an isolation transformer, the at least one voltage-source-type full-bridge circuit connected, on its input side, between the star point and the midpoint and, on its output side, to the low-voltage output terminals, or the regulating circuit comprises at least one first full-bridge circuit between cathode connections of a diode bridge in the AC/DC converter stage and the positive output, and at least one second cascade full-bridge circuit is connected between anode connections of the diode bridge and the negative output. The method includes providing a three-phase medium AC voltage to the respective input terminals of the converter, converting the medium AC voltage to DC voltage by the AC/DC converter stage of the converter and providing the DC voltage between the positive medium voltage output and the negative medium voltage output, and controlling the first and second DC/DC converters, the bi-directional switch circuits, and the regulating circuit such that a current between the positive voltage output (P) and the midpoint essentially equals a maximum phase current of the phase in which the phase voltage at the point in time of performing the control is the highest among the three AC phases and that a current between the midpoint and the negative voltage output essentially equals a minimum phase current of the phase in which the phase voltage at the point in time of performing the control is the lowest among the three AC phases.

In some embodiments of the method, the method comprises controlling the first and second DC/DC converters, the bi-directional switch circuits, and the at least one regulating circuit such that the current in the switchable branch connected to the phase that is different from the phase in which the phase voltage at the point in time of performing the control is the highest among the three AC phases and different from the phase in which the phase voltage at the point in time of performing the control is the lowest among the three AC phases, i.e. the phase with the mid voltage, essentially equals the phase current of that phase.

BRIEF DESCRIPTION OF THE DRAWINGS

Fig. 1(a) is a circuit diagram illustrating an exemplary configuration of a converter according to an embodiment;

Fig. 1(b) is a circuit diagram illustrating an exemplary configuration of a full-bridge circuit employed in the converter of Fig. 1(a);

Fig. 1(c) is a circuit diagram illustrating an exemplary configuration of a DC/DC converter employed in the converter of Fig. 1(a);

Fig. 2(a) is a circuit diagram illustrating an exemplary configuration of a converter according to an embodiment;

Fig. 2(b) is a circuit diagram illustrating an exemplary configuration of a voltage-source-type full-bridge circuit employed in the converter of Fig. 2(a);

Fig. 2(c) is a circuit diagram illustrating an exemplary configuration of a DC/DC converter employed in the converter of Fig. 2(a);

Fig. 3 is a circuit diagram illustrating an equivalent circuit of the configuration of the converter of Fig. 1;

Figs. 4(a) through 4(g) are graphs illustrating simulated waveforms of various voltages, currents, and powers in the equivalent circuit of Fig. 3 in operation;

Fig. 5 is a circuit diagram illustrating an equivalent circuit of the configuration of the converter of Fig. 2;

Figs. 6(a) through 6(g) are graphs illustrating simulated waveforms of various voltages, currents, and powers in the equivalent circuit of Fig. 5 in operation;

DETAILED DESCRIPTION

Technology is described hereinafter with reference to the figures, in which aspects exemplary embodiments are shown.

The claimed invention may, however, be embodied in different forms and should not be construed as being limited to the embodiments set forth herein. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment aspect is not necessarily limited to that embodiment aspect and can be practiced in any other embodiments aspects even if not so illustrated, or if not so explicitly described. The features, functions, and advantages may be achieved independently in various embodiments manners or may be combined in yet other embodiments.

Before describing exemplary embodiments aspects illustratively depicted in the several figures, a general introduction is provided to further understanding. Converters used e.g. in power supply units, PSUs, are generally known. For example, a topology may use a three-phase six-pulse diode rectifier bridge, also referred to as a B6 bridge or B6 stage, at the medium voltage input. The configuration of converter branches on the DC side of such a B6 bridge may vary according to the specific needs. In any such configuration, it is usually desirable that the B6 bridge is robust and shows low losses.

For example, in a conventional configuration not shown in the drawings, the three-phase unfolding function of the B6 bridge is combined with two isolated DC/DC converters, wherein the first of these is connected between a positive DC output, such as a positive DC rail, and a DC midpoint, and the second of these is connected between a negative DC output, such as a negative DC rail, and the DC midpoint. The DC midpoint is connected to the three phase AC input terminals via three four-quadrant phase-selector switches, PSS. The DC/DC converters may be operated as controlled current sources to impose a desired current, and the PSSs are configured such that these currents are mapped to the three phase input currents to be sinusoidal. As a downside, the resulting DC voltages on the input side of the DC/DC converters vary widely between 0 V and $\sqrt{3/2}\, V_g$, where Vg is the line-to-line grid rms voltage. As a consequence, also the power processed by the dc-dc converters varies widely between zero and the total nominal output power.

In another conventional example not depicted, a dedicated bridge-leg is used to inject a current into the phase that is not connected to either the positive DC output or the negative DC output via the B6 stage, i.e. the phase whose voltage is vmid, where the three AC phase voltages va, vb, vc are mapped to vmax, vmid, vmin such that vmax>vmid>vmin, i.e. the mapping changes in each sector of a mains period, wherein each such sector covers 60° of phase. As the voltage between the positive and negative output terminals is vpn=vmax-vmin, a constant power flow requires a DC/DC converter connected between the positive and negative output terminals to control ipn=P/vpn. The bridge-leg is then used to inject a current into the middle phase that is proportional to vmid. When such a conventional configuration is extended from the above-described case, in which a comparatively low voltage is present on the AC side, to a medium-voltage on the AC side by stacking multiple DC/DC converter cells, the voltages between the positive and negative DC outputs becomes high, resulting in a need of the bridge-leg configuration to bear this high DC voltage, which makes the configuration complicated and/or expensive.

With the above general understanding borne in mind, embodiments for converters are described below.

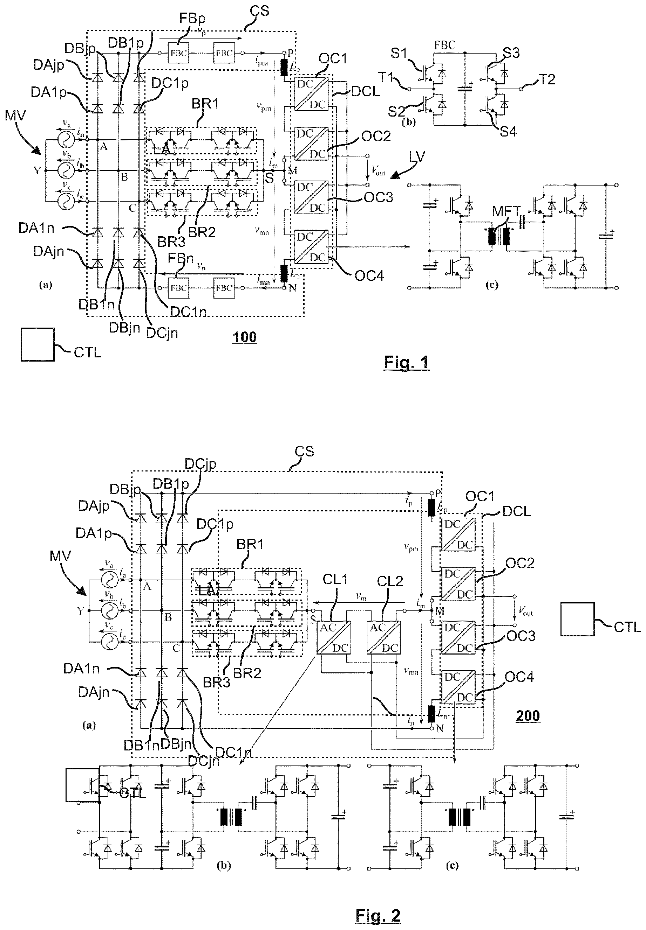

Figs. 1(a) and 2(a) each show a circuit diagram illustrating an exemplary embodiment of a converter 100 or 200, respectively. Elements common to both converters shown in Figs. 1 and 2 are described in common below. The MVAC side is shown as three voltage sources va, vb, vc for simplicity. The voltage sources va, vb, vc are Y-connected on their respective one end and provide a three-phase voltage at connection points A, B, C, wherein, at each connection point A, B, C, the phase difference with respect to the two other connection points is +120° or -120°, respectively. A B6 bridge connects the connection points A, B, C to a positive voltage output P and a negative voltage output N. From connection point A to the positive voltage output P, one or more diodes DA1p...DAjp that are connected in series may be employed, depending on the amplitude of the voltage. Likewise, from connection point A to the negative voltage output N, one or more diodes DA1n...DAjn that are connected in series may be employed. The same is true for the connection of the other connection points B, C to the respective positive or negative voltage outputs P, N. The diodes may be commonly referred to as diodes D in the following. The AC input terminals A, B, C connectible or connected to the three-phase medium-voltage AC power sources va, vb, vc, the diodes D, and the positive voltage output P and the negative voltage output N form an AC/DC converter stage CS. It is noted that "connecting" or "connected" in the context of the B6 bridge, the connection points A, B, C, and the positive voltage output P and the negative output N includes a direct connection, as in Fig. 2, or an indirect connection (via the full-bridge circuits to be described later), depending on the context.

A switchable branch BR1 is formed between the connection point A and a star point S. In the converter 100 in Fig. 1(a), star point S is directly connected to a midpoint M. In the converter 200 in Fig. 2, star point S and midpoint M have an indirect connection, as described in detail further below. Each of the switchable branches BR1, BR2, BR3 includes a bi-directional switch circuit to allow for a controlled switching, in the sense of a phase-selector switch (PSS), between the respective connection point A, B, C and the star point S.

A DC link DCL includes first DC/DC converters OC1, OC2 and second DC/DC converters OC3, OC4. Input sides of first and second DC/DC converters OC1 through OC4 are connected in series between the positive output P and the negative output N of the AC/DC converter stage CS. The above-mentioned midpoint M is present between the first DC/DC converters OC1, OC2 and the second DC/DC converters OC3, OC4. As stated above, in the converter 100, the star point S is directly connected to the midpoint M, and in the converter 200, the star point S is indirectly connected to the midpoint M via an input-side of two voltage-source-type full-bridge circuits CL1, CL2 each including a DC/DC stage. Note that the number of voltage-source-type full-bridge circuits CL1, CL2 is not limited to two, and may be one, or three or more.

In the configuration shown in Fig. 2(a), the voltage-source-type full-bridge circuits CL1, CL2 are connected, on their output side, to the low-voltage output terminals at which the low voltage $V_{out}$ is present.

The voltage-source-type full-bridge circuits CL1, CL2 form a regulating circuit of the converter 200.

In the converter 100 of Fig. 1(a), the voltage-source-type full-bridge circuits CL1, CL2 are not present. A regulating circuit of the converter 100 is formed by a first full-bridge circuit FBp between the cathode connections of the B6 bridge in the AC/DC converter stage CS and the positive output P, and by a second full-bridge circuit FBn between the anode connections of the B6 bridge in the AC/DC converter stage CS and the negative output N. Note that the number of first and second full-bridge circuits may be one, or it may be two or more, as in Fig. 1(a). In the case of two or more first and/or second full-bridge circuits, the full-bridge circuits FBp, FBn are each stacked in a series connection between the anode/cathode and the positive/negative terminal.

When the converter is connected to the power sources va, vb, vc, the voltages applied to the connection points A, B, C are phase shifted by 120° to each other. Thus, there is always one phase that has the highest voltage among the three phases, one phase that has the lowest voltage among the three phases, and one phase that has a voltage in between the highest and the lowest voltage. The switchable branch BR1, BR2, BR3 that, at a certain point in time, is connected to the connection point A, B, C having the highest voltage (vmax) at that point in time is said to be the branch having the highest phase voltage, and referred to as the high branch. Likewise, the switchable branch BR1, BR2, BR3 that, at a certain point in time, is connected to the connection point A, B, C having the lowest voltage (vmin) at that point in time is said to be the branch having the lowest phase voltage, and referred to as the low branch. The switchable branch BR1, BR2, BR3 that, at a certain point in time, is connected to the connection point A, B, C having the voltage in between the highest and the lowest voltage at that point in time is said to be the branch having a medium, middle, or mid voltage (vmid), and referred to as the mid branch.

A full-bridge circuit, or full-bridge cell, may be configured as shown in Fig. 1(b). Switches S1 through S4, such as IGBT transistors, in each full-bridge circuit are connected between a first terminal T1 and a second terminal T2. A free-wheeling diode is respectively connected antiparallel to each switch S1...S4. The full-bridge cells in the converter 100 process substantially net-zero power. A voltage-source-type full-bridge circuit, or full-bridge cell, may be configured as shown in Fig. 2(b). The voltage-source-type full-bridge cells in the converter 200 process non-zero net power and thus include a DC stage such as the isolated DC/DC converter shown in Fig. 2(b).

An exemplary configuration of a DC/DC converter, or DC/DC converter cell, OC1...OC4 is illustrated in each of Figs. 1(c), 2(c), wherein a Medium Frequency Transformer MFT serves as a galvanic isolation.

In each of the configurations shown in Figs. 1(a) and 2(a), a controller CTL controls the first and second DC/DC converters OC1 through OC4, the bi-directional switch circuits, and the regulating circuit such that a current $i_{pm}$ between

the positive voltage output P and the midpoint M essentially equals a maximum phase current $i_{max}$ of the phase in which the phase voltage at the point in time of performing the control is the highest among the three AC phases, and such that a current $i_{mn}$ between the midpoint M and the negative voltage output N essentially equals a minimum phase current $i_{min}$ of the phase in which the phase voltage at the point in time of performing the control is the lowest among the three AC phases. As used herein, an essentially equal current may include a current relation in which the currents to be compared have essentially the same magnitude, irrespective of the direction of the current flow; that is, for example, i_mn = -i_min.

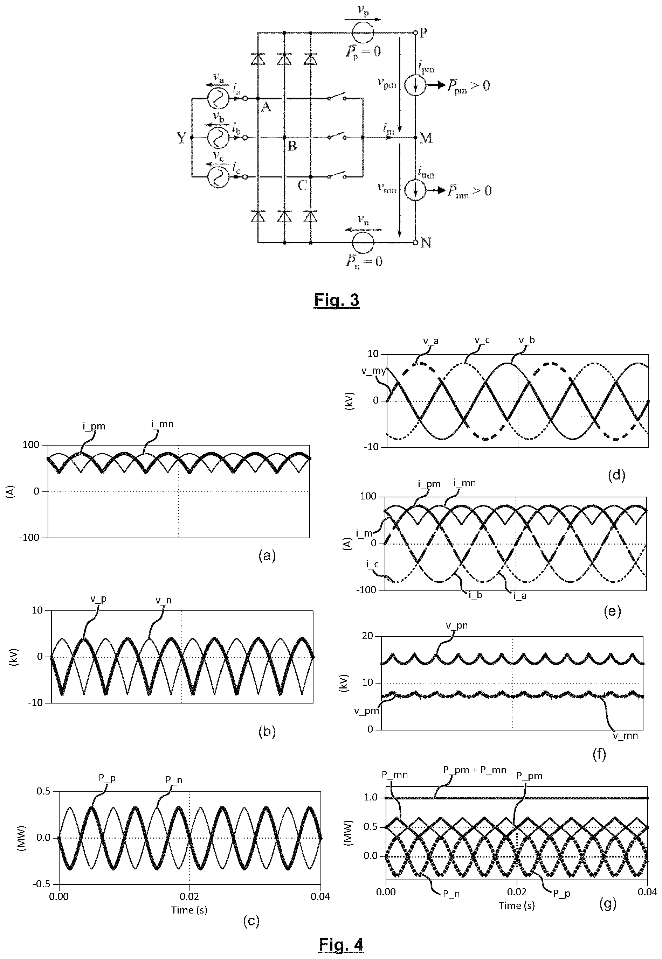

An equivalent circuit of the converter 100 of Fig. 1(a) is shown in Fig. 3; and corresponding graphs illustrating simulated waveforms of various voltages, currents, and powers in the equivalent circuit of Fig. 3 in operation are shown in Figs. 4(a) through 4(g). For constant power and unity-power-factor operation, output current references $i_{pn}$ and $i_{mn}$ are made to correspond to the maximum and minimum phase current, respectively, i.e. $i_{pn}=G^*v_{max}$ and $i_{mn}=-G^*v_{min}$. $G^*=P^*/V_g^2$, and $V_g$ is the grid-to-line rms voltage. $G^*$ may be obtained, e.g., by a higher-level controller (not shown) that, e.g., regulates the system output voltage $V_{out}$. The two full-bridge circuit voltage references, $v_p$ and $v_n$, are obtained from the requirement that the two voltages of the first DC/DC converters OC1, OC2 and the second DC/DC converters OC3, OC4 should be equal ($v_{pn} = v_{mn}$). These are the voltages that the regulating circuits in Fig. 1(a) need to generate. Applying Kirchhoff's Voltage Law leads to

$$v_p = \frac{P^* - G^*v_{\mathrm{max}}^2 + G^*v_{\mathrm{max}}v_{\mathrm{mid}} + G^*v_{\mathrm{max}}v_{\mathrm{min}} - G^*v_{\mathrm{mid}}v_{\mathrm{min}}}{G^*v_{\mathrm{min}} - G^*v_{\mathrm{max}}}$$

$$v_n = \frac{P^* - G^*v_{\mathrm{max}}^2 - G^*v_{\mathrm{max}}v_{\mathrm{mid}} + G^*v_{\mathrm{max}}v_{\mathrm{min}} + G^*v_{\mathrm{mid}}v_{\mathrm{min}}}{G^*v_{\mathrm{min}} - G^*v_{\mathrm{max}}}$$

As seen from the simulated waveforms in Figs. 4(a) through 4(g), with the configuration of the converter 100 as shown in Fig. 1(a) and the corresponding functionality as described herein, beneficially, a wide voltage fluctuation across the first and second DC/DC converters OC1 ... OC4 is reduced significantly.

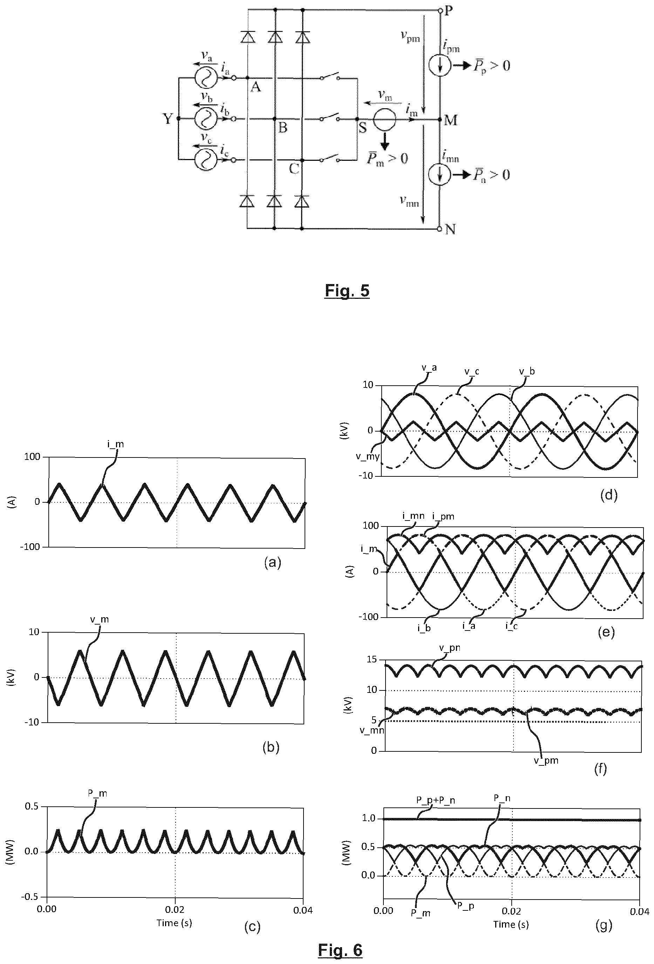

An equivalent circuit of the converter 200 of Fig. 2(a) is shown in Fig. 5; and corresponding graphs illustrating simulated waveforms of various voltages, currents, and powers in the equivalent circuit of Fig. 5 in operation are shown in Figs. 6(a) through 6(g). The first and second DC/DC converters OC1 ... OC4 directly impress the currents of the maximum and minimum phase, respectively, wherein the current references are as described above, i.e. $i_{pn}=G^*v_{max}$ and $i_{mn}=-G^*v_{min}$. The full-bridge voltage reference $v_m^*$ follows from the requirement $v_p = v_n$, and hence the following applies:

$$v_m^* = \frac{1}{2} \cdot (v_{\mathrm{max}} + v_{min}) - v_{mid}.$$

The converters 100, 200 as described herein each have a simple configuration as compared to conventional topologies. The basic three-level structure reduces voltage stress of some or all converters to half of the medium voltage, which simplifies their construction and especially insulation-related issues (e.g., auxiliary power, signalling, reliability monitoring). This may help to advantageously design the DC/DC converter cell and MFT. The bi-directional four-quadrant phase-selector switches switch at low frequency, lowering switching losses, and face just half of the medium voltage.

It is noted that throughout this specification, symbols with subscript indices (e.g., $v_{max}$), symbols with underline-separated indices (e.g., v_max) and symbols in which the indices are not separated from the main quantity (e.g., vmax) may be used interchangeably but, in each case, designate the same.

Although particular embodiments have been shown and described, it will be understood that it is not intended to limit the claimed inventions to the preferred embodiments, and it will be obvious to those skilled in the art that various changes and modifications may be made without department from the spirit and scope of the claimed inventions. The specification and drawings are, accordingly, to be regarded in an illustrative rather than restrictive sense. The claimed inventions are intended to cover alternatives, modifications, and equivalents.

## Claims

1. A converter (100, 200) for transferring power from a medium voltage side (MV) to a low voltage side (LV) or vice-versa, the converter comprising:

an AC/DC converter stage (CS) configured to be connected to a three-phase medium-voltage AC power source (va, vb, vc) at the medium voltage side, the AC/DC converter stage (CS) having three AC input terminals (A, B, C) for the respective AC phases of the medium-voltage AC power source (va, vb, vc), and having a positive voltage output (P) and a negative voltage output (N);

a DC link (DCL) comprising at least one first DC/DC converter (OC1, OC2) and at least one second DC/DC converter (OC3, OC4),

wherein input sides of the at least one first and second DC/DC converters (OC1, OC2, OC3, OC4) are connected in series between the positive output (P) and the negative output (N) of the AC/DC converter stage (CS), with a midpoint (M) between the at least one first DC/DC converter (OC1, OC2) and the at least one second DC/DC converter (OC3, OC4);

wherein output sides of the at least one first and second DC/DC converters (OC1, OC2, OC3, OC4) are connected in parallel to provide a low voltage ($V_{out}$) to low-voltage output terminals on the low voltage side;

three switchable branches (BR1, BR2, BR3), each of the switchable branches (BR1, BR2, BR3) comprising a bi-directional switch circuit between a respective one of the three AC input terminals (A, B, C) and a common star point (S);

a regulating circuit comprising

a) either at least one voltage-source-type full-bridge circuit (CL1, CL2) including a DC/DC stage, in particular a DC/DC converter including an isolation transformer, the at least one voltage-source-type full-bridge circuit (CL1, CL2) connected, on its input side, between the star point (S) and the midpoint (M) and, on its output side, to the low-voltage output terminals; or

b) at least one first full-bridge circuit between cathode connections of a diode bridge in the AC/DC converter stage and the positive output (P), and at least one second full-bridge circuit connected between anode connections of the diode bridge and the negative output (N);

a controller (CTL) configured to control the first and second DC/DC converters, the bi-directional switch circuits, and the regulating circuit such that a current ($i_{pm}$) between the positive voltage output (P) and the midpoint (M) essentially equals a maximum phase current ($i_{max}$) of the phase in which the phase voltage at the point in time of performing the control is the highest among the three AC phases, and such that a current ($i_{mn}$) between the midpoint (M) and the negative voltage output (N) essentially equals a minimum phase current ($i_{min}$) of the phase in which the phase voltage at the point in time of performing the control is the lowest among the three AC phases.

2. The converter (100, 200) according to claim 1, wherein the controller (CTL) is configured to control the first and second DC/DC converters, the bi-directional switch circuits, and the regulating circuit such that the current in the switchable branch connected to the phase that is different from the phase in which the phase voltage at the point in time of performing the control is the highest among the three AC phases and different from the phase in which the phase voltage at the point in time of performing the control is the lowest among the three AC phases essentially equals the phase current of that phase.

3. The converter (100, 200) according to claim 1 or 2, wherein

the at least one first DC/DC converter (OC1, OC2) comprises a plurality of first DC/DC converter circuits connected with their input sides in series between the positive medium voltage output (P) and the DC link midpoint (M); and

the at least one second DC/DC converter (OC3, OC4) comprises a plurality of second DC/DC converter circuits connected with their cell input sides in series between the negative medium voltage output (N) and the DC link midpoint (M).

4. The converter (100, 200) according to claim 3, wherein

each of the first and second DC/DC converter circuits (OC1...OC4) comprises, respectively, the input side having a DC/AC converter circuit and an output side having an AC/DC converter circuit, wherein the input side and output side are galvanically isolated from each other, optionally galvanically isolated by an AC/AC transformer (MFT) such as a Medium Frequency Transformer for transferring power from the cell input side to the cell output side or vice-versa.

5. The converter (100 200) according to claim 4, wherein the first and second DC/DC converter circuits (OC1... OC4) have, at their output side, a diode-based passive AC/DC converter circuit.

6. The converter according to any one of the preceding claims, wherein output sides of the at least one first and the at least one second DC/DC converter circuits are connected in parallel to form the low voltage side.

7. The converter according to any one of the preceding claims, wherein the AC/DC converter stage (CS) comprises a diode bridge, in particular a B6 diode bridge.

8. The converter according to any one of the preceding claims, wherein the at least one first and second DC/DC converter circuits (OC1... OC4) operate at medium frequency.

9. A method of transferring power from a medium voltage side (MV) to a low voltage side (LV) by a converter (100, 200), the converter (100, 200) comprising an AC/DC converter stage (CS) connected to a three-phase medium-voltage AC power source (va, vb, vc) at the medium voltage side, the AC/DC converter stage (CS) having three AC input terminals (A, B, C) for the respective AC phases of the medium-voltage AC power source (va, vb, vc), and having a positive voltage output (P) and a negative voltage output (N), a DC link (DCL) comprising at least one first DC/DC converter (OC1, OC2) and at least one second DC/DC converter (OC3, OC4) each having their input sides connected in series between the positive output (P) and the negative output (N) of the AC/DC converter stage, with a midpoint (M) between the at least one first DC/DC converter (OC1, OC2) and the at least one second DC/DC converter (OC3, OC4), and each having their output sides connected in parallel to provide a low voltage ($V_{out}$) to low-voltage output terminals on the low voltage side, three switchable branches (BR1, BR2, BR3), each of the switchable branches (BR1, BR2, BR3) comprising a bi-directional switch circuit between a respective one of the three AC input terminals (A, B, C) and a common star point (S), a regulating circuit comprising either at least one voltage-source-type full-bridge circuit (CL1, CL2) including a DC/DC stage, in particular a DC/DC converter including an isolation transformer, the at least one voltage-source-type full-bridge circuit (CL1, CL2) connected, on its input side, between the star point (S) and the midpoint (M) and, on its output side, to the low-voltage output terminals, or at least one first full-bridge circuit between cathode connections of a diode bridge in the AC/DC converter stage and the positive output (P), and at least one second full-bridge circuit connected between anode connections of the diode bridge and the negative output (N), wherein the method comprises:

- providing a three-phase medium AC voltage to the respective input terminals (A, B, C) of the converter;
- converting the medium AC voltage to DC voltage by the AC/DC converter stage of the converter and providing the DC voltage between the positive medium voltage output (P) and the negative medium voltage output (N); and
- controlling the first and second DC/DC converters (OC1...OC4), the bi-directional switch circuits, and the regulating circuit such that a current ($i_{pm}$) between the positive voltage output (P) and the midpoint (M) essentially equals a maximum phase current ($i_{max}$) of the phase in which the phase voltage at the point in time of performing the control is the highest among the three AC phases and that a current ($i_{mn}$) between the midpoint (M) and the negative voltage output (N) essentially equals a minimum phase current ($i_{min}$) of the phase in which the phase voltage at the point in time of performing the control is the lowest among the three AC phases.

10. The method of claim 9, further including controling the first and second DC/DC converters, the bi-directional switch circuits, and the regulating circuit such that the current in the switchable branch connected to the phase that is different from the phase in which the phase voltage at the point in time of performing the control is the highest among the three AC phases and different from the phase in which the phase voltage at the point in time of performing the control is the lowest among the three AC phases essentially equals the phase current of that phase.

11. Use of the converter (100, 200) according to any one of claims 1 to 8 to perform the method according to claim 9 or 10.

Fig. 1

Fig. 2

Fig. 3

Fig. 4

**Fig. 5**

**Fig. 6**

Europäisches
Patentamt

European
Patent Office

Office européen
des brevets

# EUROPEAN SEARCH REPORT

Application Number

**EP 23 18 6463**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BOGDANOVS ARTURS ET AL: "Opportunity Analysis of Battery Electric Vehicle Fast Charging Infrastructure Development in Latvia", 2021 IEEE 62ND INTERNATIONAL SCIENTIFIC CONFERENCE ON POWER AND ELECTRICAL ENGINEERING OF RIGA TECHNICAL UNIVERSITY (RTUCON), IEEE, 15 November 2021 (2021-11-15), pages 1-8, XP034088665, DOI: 10.1109/RTUCON53541.2021.9711718 [retrieved on 2022-02-10] * page 5 - page 7 * | 1-11 | INV. H02M1/00 H02M1/42 H02M3/00 H02M3/335 H02M7/48 H02M7/483 H02M1/15 H02M7/487 |
| A | WO 2018/185385 A1 (RENAULT SAS [FR]; NISSAN MOTOR [JP]) 11 October 2018 (2018-10-11) * figure 2 * | 1-11 | |
| A | DE 10 2019 215439 A1 (VITESCO TECH GMBH [DE]) 15 April 2021 (2021-04-15) * figure 1 * | 1-11 | TECHNICAL FIELDS SEARCHED (IPC) |
| Y | WO 2019/166642 A1 (ETH ZUERICH [CH]) 6 September 2019 (2019-09-06) * page 17 - page 18 * * figure 5 * | 1-11 | H02M |
| A | FUERBACK VINICIUS BERNARDI ET AL: "Hybrid Unidirectional MMC-Based Rectifier", 2018 IEEE 4TH SOUTHERN POWER ELECTRONICS CONFERENCE (SPEC), IEEE, 10 December 2018 (2018-12-10), pages 1-8, XP033515778, DOI: 10.1109/SPEC.2018.8636041 [retrieved on 2019-02-05] * figure 4 * | 1-11 | |

The present search report has been drawn up for all claims

| Place of search | Date of completion of the search | Examiner |
|---|---|---|
| The Hague | 13 December 2023 | Lochhead, Steven |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 6463

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2023

| Patent document cited in search report | Publication date | Patent family member(s) | | Publication date |
|---|---|---|---|---|
| WO 2018185385 A1 | 11-10-2018 | CN | 110521101 A | 29-11-2019 |
| | | EP | 3607644 A1 | 12-02-2020 |
| | | FR | 3064848 A1 | 05-10-2018 |
| | | WO | 2018185385 A1 | 11-10-2018 |
| DE 102019215439 A1 | 15-04-2021 | NONE | | |
| WO 2019166642 A1 | 06-09-2019 | CH | 714715 A2 | 13-09-2019 |
| | | WO | 2019166642 A1 | 06-09-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021115966 A1